# EUROPEAN PATENT SPECIFICATION

(11) **EP 1 841 605 B1**
(45) Date of publication and mention of the grant of the patent: **26.11.2008**
(21) Application number: 05706995.7
(22) Date of filing: 25.01.2005
(51) Int. Cl.: B60C 15/04, B29D 30/48

(54) **PNEUMATIC TYRE WITH IMPROVED BEAD STRUCTURE**
LUFTREIFEN MIT VERBESSERTER WULSTSTRUKTUR
PNEU A STRUCTURE DE TALON AMELIOREE

(43) Date of publication of application: 10.10.2007
(73) Proprietor: Pirelli Tyre S.p.A., 20126 Milano (IT)
(72) Inventor: DAGHINI, Guido, I-20126 Milano (IT); CEREDA, Giuseppe, I-20126 Milano (IT)
(74) Representative: Giannesi, Pier Giovanni
(86) International application number: PCT/EP2005/000685
(87) International publication number: WO 2006/079352

(56) References cited:
- DE-A1- 3 738 446
- US-A- 5 141 032

## Description

The present invention relates to a pneumatic tyre suitable for being used in trucks or lorries, especially for medium/heavy transport.

In particular, the present invention concerns a pneumatic tyre provided with an improved bead structure which contributes in increasing the geometrical stability as well as the resistance to local deformations of the tyre bead region.

A tyre generally comprises: a carcass structure comprising at least one carcass ply, the ends of which are folded back or secured to two annular reinforcing elements, i.e. the so-called "bead cores"; a tread band; a belt structure placed between the carcass structure and the tread band; and a pair of sidewalls applied to said carcass structure in axially opposite positions.

The tyre region which comprises the bead core is known as "tyre bead" and performs the function of fixing the tyre on a respective rim. In particular, the bead core serves as anchorage for the carcass ply or plies, and, moreover, it withstands the forces exerted by the carcass under the effect of the inflation pressure as well as the deformations resulting from the travel of the tyre. Furthermore, the bead core ensures the transmission of longitudinal forces and, in case of tubeless tyres, ensures the seal between the tyre and the wheel rim, the latter being provided in correspondence of the bead mounting position and comprising two substantially conical coaxial surfaces which act as the supporting base for the tyre beads. Said surfaces generally terminate in a flange, radially projecting outwardly, that supports the axially outer surface of the bead and against which the latter abuts by virtue of the tyre inflation pressure. Proper positioning of the bead into its seat is ensured by the conical shape of the bead seat in cooperation with the metal bead core.

Generally, in a position radially external to said bead core, the bead further comprises a rubber strip, conventionally called "bead filling" or "bead apex", which has a substantially triangular cross-section and extends radially outwardly from the respective bead core.

Different types of bead cores are known in the art.

For example, a typical bead core structure is the so-called "Alderfer" structure which has a configuration of the type "m x n", where "m" indicates the number of axially adjacent wires or cords (obtained by stranding at least one pair of wires or cords) and "n" indicates the number of radially superimposed layers of said wires (or cords). This structure is obtained by using a rubberized strip comprising a predefined number of - textile or metallic - wires or cords and by spirally winding (coiling) said rubberized strip onto itself so as to form a desired number of layers arranged radially superimposed one on top of the other. This constructional method allows the formation of cross-sectional contours of the bead core which are of a substantially quadrangular type. Examples of Alderfer structure are, in fact, 4x4, 5x5 or 4x5 structures.

A further conventional bead core structure is the so-called "single wire bead core". This is formed from a single rubberized wire (or cord) which is wound spirally so as to form a first layer of axially adjacent turns (coils); then, in a position radially external to said first layer, the same wire (or cord) is further coiled so as to form a second layer in a position radially external to the first layer, and so on, so as to form several radially superimposed layers. Therefore, by varying the number of turns in each layer, it is possible to obtain cross-sectional contours of the bead core with different geometrical forms, for example a hexagonal shaped cross-section. A regular hexagonal bead core may be formed, for example, by means of 19 windings arranged in the configuration: 3-4-5-4-3. This series of numbers indicates that the individual rubberized wire (or cord) is coiled so as to form firstly three turns axially adjacent to each other to form a first layer; then four turns axially adjacent to each other are provided in succession so as to form a second layer radially superimposed on the first layer, followed by five turns, axially adjacent to each other, so as to form a third layer radially superimposed on the second layer, then four turns axially adjacent to each other so as to form a fourth layer radially superimposed on the third layer and finally three turns axially adjacent to each other so as to form a fifth layer radially superimposed on the fourth layer.

A further conventional bead core structure is obtained by using a plurality of rubberized wires (or cords), each individual wire (or cord) being radially coiled onto itself so as to form a column of radially superimposed wound turns (coils). Several columns of turns, possibly with a different vertical extension (namely different number of wound turns radially superimposed on each other), axially adjacent to each other, thus form the abovementioned bead core. Preferably, said wires have predetermined cross sections (e.g. a substantially hexagonal cross section) so that the wires of axially adjacent coils can be coupled together to form an assembly (i.e. the bead core) that is constituted by equal and distinct elements (modular elements) and that is provided with a compact cross section, i.e. the latter does not comprise hollow spaces or interferences and has an area corresponding to the sum of the section areas of said distinct elements.

In case a bead core is formed by spirally winding a single wire (so as to form the "single wire bead core" mentioned above) or a plurality of wires (so as to form a plurality of columns of radially superimposed wound turns, each column being formed by one specific wire), some problems generally arise during the manufacturing process of the bead core (especially in the case the used wire is not rubberized) and also, when the finished product is produced, in keeping the several convolutions lying in ordered convolutions and layers.

Generally, the wires forming the tyre bead cores are coated with a rubber composition. Since mounting of the tyre on the wheel rim and removal of the tyre therefrom require that the tyre bead steps over the rim flange, the latter having a diameter greater than the radially inner diameter of the bead core, the bead core needs to be deformed so as to take an elliptical configuration (ovalization) in order to allow the above mentioned operations (mounting on and dismounting from the wheel rim) to be carried out. However, especially in case tubeless tyres of large size are considered (e.g. truck tyres), if the tyre bead core is made of rubberized wires, after vulcanization the bead core becomes rigid and compact, thus scarcely flexible. In order to solve such a problem, provision was made of bead cores formed of bare wires (i.e. non-rubberized wires) which are able to displace circumferentially with respect to one another and thus to allow the required deformation (ovalization) of the bead core, even in the cured tyre. However, bead cores formed of non-rubberized wires do not possess sufficient geometrical stability and torsional strength to withstand the stresses exterted onto the bead cores both during the tyre manufacturing steps (especially during vulcanization and moulding of the tyre) and in operation of the tyre.

It can be noted that this aspect is even more critical since the bead seat is generally inclined with respect to the tyre rotation axis, fact which inevitably contributes in negatively affecting the geometrical stability of the bead core convolutions.

Some technical solutions are known in the art to confer an annular shape to the bead core and to contribute in keeping the desired shape both during the manufacturing of the tyre and the use thereof, so that irregular displacement of the wires convolutions can be reduced and the latter are hold together to ensure a correct alignment of said wires and a good frictional contact thereof.

For instance, documents US-2,149,079; US-1,503,883 and US-4,561,919 disclose the use of a textile strip (fabric wrapper) which is wound around the threadlike elements convolutions.

GB-2,123,360 discloses a bead core comprising a circumferentially extending ring of a material having a U-shaped cross-section pocket at least partially enclosing a circumferential winding of high tensile reinforcement material. The U-shaped cross-section pocket may be closed so as to fully enclose the winding of high tensile material or may be open and enclose only a part of the cross-section of the winding of high tensile material. The ring material is preferably metal such as steel and it may be zinc or brass plated to assist in bonding to the rubber of the tyre bead.

US-4,938,437 discloses a rubberless tyre bead assembly containing either a single wire element or multiple wire elements wound about an axis to provide a plurality of convolutions of the wire element(s) to form the bead hoop and shape-retaining members engaging the bead hoop about the circumference of the bead hoop to retain the bead assembly in a planar configuration. According to this document, said shape-retaining members include the use of metal clip members applied at several locations about the bead circumference as well as metal ties, spring clips, spiral wrapped fabrics or wires around the entire or a portion of the bead circumference, spot soldering, brazing or welding periodic locations about the bead circumference, use of solder-coated wire in the bead wires, gluing or use of adhesives, applying fusible polymeric material periodically or entirely around the bead circumference, dipping the bead assemblies into an adhesive coating, and miniature hose clamp members which securely engage at least a portion of the convolutions of the single wire to hold the bead assembly. For instance, Figure 7 shows a metal clip member wrapped around the dense packed single wire tyre bead assembly; Figure 10 shows a helical retaining clip or spring wrap member which circumferentially engages the completed tyre bead assembly to retain the bead assembly in a plane perpendicular to the bead axis of revolution.

Document US-3,949,800 discloses a pneumatic tyre whose beads are provided with bead rings of the package type having improved stability of shape, said package ring being formed of one or more wires having a quadrilateral section with at least two parallel opposite sides, the adjoining turns of wires touching each other both in the radial direction and in the axial direction along their facing surfaces. According to this document the bead core is preferably surrounded by a covering which comprises an insert of stuffing rubber in contact with the bead core and a rubber sheathing which clamps the stuffing.

Document US-4,406,317 discloses a pneumatic tyre comprising bead cores made of wire layers wound to be placed over one another and consisting of wires having an angular cross section. Due to the periodic stress of the tyre in movement, in order to avoid points of break of the carcass at the edges of the bead core, it has been customary to mold hard rubber compositions about the bead cores. Then, in order to save costs, it was preferred to wrap the bead cores with protective strips that are substantially accomodated to the contour of the bead cores and surrounding the corners thereof by rounding them off.

With respect to the known solutions mentioned above, the Applicant has perceived the need of improving the geometrical stability of the tyre bead region and the structural strength thereof, in particular its resistance to local deformations, both in operation (i.e. during revolution of the tyre on the ground) and during the tyre manufacturing process steps successive to the bead core production and assembling within the tyre structure.

In particular, the Applicant has perceived the need of increasing the resistance of the tyre bead to local deformations without negatively affecting the tyre bead flexibility which, as mentioned above, is advantageously required, for instance, during the mounting of the tyre on the wheel rim and during the dismounting of the tyre therefrom.

The Applicant has noticed that said local deformations, which are exerted on the convolutions of the wire(s) forming the tyre bead cores, are mainly due to the following factors.

Firstly, said deformations are due to the stress concentrations arising in the tyre bead region as a consequence of the relevant load carried by the vehicle, said stresses causing the tyre bead to bulge out, laterally beyond the rim edge. This is particularly true in the case of high duty vehicles which are requested to withstand loads, and sometimes overloads, of great entity.

Secondly, said deformations are generally caused also by the tyre manufacturing steps following the bead core production step, in particular the vulcanization and moulding steps carried out on the finished green tyre. The Applicant has noticed that the vulcanization and moulding steps can cause the convolutions of the wire(s) to move with respect to each other in the cross section of the bead cores to such an extent that remarkable differences in tensioning of the wire(s) can occur. The latter may cause a relevant decrease of the resistance to rupture of said elements. Moreover, the Applicant has noticed that a remarkable distortion of the wire(s) convolutions in the cross section of the tyre bead cores and the consequent formation of a non-planar configuration thereof inevitably results in a geometrical distorted tyre bead and/or in loss of a precise bead position in the cured tyre.

Moreover, the Applicant has perceived that the need of improving the geometrical stability of the tyre bead region is particularly advantageous not only in the case the bead core is formed of non-rubberized wire(s), but also in the case a rubber coating is provided around each wire. In fact, even if the presence of such a rubber coating positively contributes in holding together the wire(s) convolutions thanks to the adhesive property of the green rubber, the Applicant has noticed that in some circumstances, especially in case of truck tyres, the geometrical stability of the tyre bead is not guaranteed. Therefore, in conventional tyre manufacturing processes it is common practice to carry out a partial curing of the bead core so as to increase the geometrical stability thereof, especially during manufacturing.

The Applicant's efforts have thus been focused on modifying the structure of the tyre bead region in order to obtain the desired structural strength in combination with a flexibility degree which can ensure an easy mounting/dismounting of the tyre on/from the wheel rim while providing, at the same time, a uniform and correct engagement of the tyre bead region with the rim flange along the whole circumferential profile of the tyre bead.

The Applicant has found that said results can be achieved by providing the tyre bead with a bead core which comprises a retaining member that envelopes the plurality of coils of metallic wires forming said bead core, the retaining member comprising a plurality of elongated reinforcing elements which comprise at least one preformed threadlike metallic element, the latter having a diameter in the range from about 0.05 mm to about 0.25 mm.

Preferably, each elongated reinforcing element of the retaining member is a metallic cord comprising a plurality (i.e. at least two) of threadlike elements, at least one of said threadlike elements being preformed.

In the present description the term "elongated preformed reinforcing element" is used to indicate a reinforcing element comprising at least one preformed threadlike element.

The Applicant has found that high mechanical resistance properties can be conferred to the bead core by the presence of metallic reinforcing elements, while high flexibility characteristics can be obtained by preforming at least one threadlike element of the elongated reinforcing elements, said high flexibility being typical of a reinforcing fabric made from a textile material.

Therefore, the Applicant has found that by employing elongated preformed metallic elements in the retaining member enveloping the bead cores it is possible to confer thereto high strength properties, which are typical of a semifinished product comprising metallic reinforcing elements, while ensuring a suitable flexibility degree to the bead core, which is typical of a semifinished product comprising textile reinforcing elements.

Said aspect is very important also from a process point of view since a good flexibility of the retaining member can ensure that, during the tyre manufacturing process, the application of said retaining member can be easily and correctly carried out, said member accurately following the external profile of the bead core onto which it is applied.

In fact, if the retaining member is too stiff and can not be correctly wound around the bead core, some air may remain entrapped between the bead core and the retaining member. The presence of air which can come into contact with the metallic reinforcing elements of the retaining member as well as with the metallic wire(s) of the bed core, has to be avoided since undesired corrosion phenomena can take place within the tyre bead.

Thanks to the flexibility of the retaining member, further advantages can be obtained: a) the retaining member manufacturing process can be carried out by using the same apparatuses for calendering and cutting which are normally employed for textile materials; b) the step of application of the retaining member in the tyre manufacturing process is carried out very easily thanks to the flexibility of the retaining member.

As mentioned above, the diameter of the preformed metallic threadlike elements of the retaining member is selected to be small, e.g. in the range of from 0.05 mm to 0.25 mm.

The Applicant has found that the use of fine (i.e. with small diameters) preformed metallic threadlike elements as reinforcing elements for the retaining member is particularly advantageous since it allows to decrease the weight of said member and to increase its flexibility, thereby achieving the advantages mentioned above.

Moreover, the Applicant has found that the retaining member of the present invention has a good green tackiness which favours the adhesion degree between the green rubber compound and the metallic threadlike elements forming the retaining member.

Consequently, when this retaining member is handled during the application thereof in the tyre manufacturing process, it can be stretched, particularly in a direction transversal to the metallic threadlike elements, without running the risk of separation of the reinforcing elements from the green rubber.

Such a separation has to be avoided since it can give rise to corrosion phenomena or to the formation of critical areas inside of the tyre bead wherein metallic elements, devoid of the rubber coating, can protrude from the bead, a defect that can cause the tyre to be discarded.

Furthermore, the Applicant has found that the retaining member of the present invention shows a very good adhesion of the cured rubber composition to the metallic threadlike element, even after aging (said aspect contributing to avoid the formation of corrosion phenomena), and a remarkable mutual interpenetration of the preformed threadlike elements of the cord (or of the non-preformed threadlike elements into the preformed threadlike elements in case the cord is made of preformed and non-preformed threadlike elements) so that undesired phenomena, such as fraying out of the cord end or curling of the cord end portion, do not occur when the cutting of the cord is performed.

In a first aspect the present invention concerns a pneumatic tyre comprising:
- a bead structure comprising a pair of axially spaced apart bead cores;
- a carcass structure comprising at least one carcass ply extending between said bead cores and secured at axially opposite end portions to a respective one of said bead cores, each axial end portion being turned up around said bead cores;
- a tread band extending circumferentially around said carcass structure;
- a belt structure circumferentially located between said carcass structure and said tread band; and
- at least one pair of sidewalls applied to said carcass structure in axially opposite positions,
wherein each bead core comprises:
- a plurality of coils of at least one metallic wire, said coils being radially superimposed and axially arranged side-by-side with respect to one another, and
- a retaining member enveloping said plurality of coils, said retaining member comprising a plurality of mutually substantially parallel elongated reinforcing elements, said elongated reinforcing elements comprising at least one preformed threadlike metallic element, said at least one preformed threadlike metallic element having a diameter in the range of from 0.05 mm to 0.25 mm.

Preferably, each elongated reinforcing element is a metallic cord having at least one preformed metallic threadlike element, while the remaining threadlike elements forming said at least one cord are of the non-preformed type.

In a further embodiment, each elongated reinforcing element is a metallic cord the threadlike elements of which are all preformed. Prior to undergoing a given preforming action, the threadlike elements have a straight configuration.

Preferably, the deformations of the preformed threadlike elements are of the coplanar type. Namely each preformed threadlike element lies in a plane.

Preferably, said threadlike elements are preformed so that they assume a wave-shaped configuration so that they are substantially devoid of sharp edges and/or discontinuities in curvature along their longitudinal extension. Said feature is particularly advantageous since the absence of said sharp edges/corners results in a favourable increasing of the breaking load of the threadlike elements.

Particularly preferred is a preforming according to substantially sinusoidal undulations. Preferably, said sinusoidal undulations have a wavelength of between 2.5 mm and 30 mm, and more preferably between 5 mm and 25 mm. Preferably, said sinusoidal undulations have a wave amplitude of between 0.12 mm and 1 mm. The wavelength and wave amplitude ranges referred to above may be measured directly on the non-rubberized threadlike element before it is inserted into the tyre or on the finished (vulcanized) tyre. Advantageously, the measurement of said parameters may be performed on the threadlike element by using a magnifying lens and a graduated scale (for example a graduated ruler). In the case where a finished (or vulcanized) tyre is to be analysed, it is necessary to extract the bead core from the tyre, to separate the retaining member and to remove the rubberizing compound therefrom by using suitable solvents, for example by treating it with dichlorobenzene at 100°C for at least 12 hours.

In an alternative embodiment, the deformation has a form which is not of the coplanar type, but for example of the helical type.

In order to obtain a preformed threadlike element according to the present invention, it is possible to use any one of the methods known in the sector. For example, it is possible to use toothed-wheel devices of the type illustrated in US-5,581,990 or to use the device described in patent application WO 00/39385, in the name of the same Applicant. Said device comprises a pair of pulleys, each provided with a plurality of facing lugs able to intermesh with each other over a predefined section so as to induce simultaneously an axial deformation and a flexural deformation in a threadlike element made to travel along the space lying between the lugs of the first pulley and the corresponding lugs of the second pulley. The abovementioned intermeshing action may be effected as a result of the movement of said pair of pulleys driven rotationally by said threadlike element.

Preferably, the elongated reinforcing elements are substantially equally distributed in the retaining member, i.e. the axial spacing between consecutive adjacent single elongated reinforcing element is substantially constant.

Moreover, the Applicant has found that the preformed, metallic, threadlike elements which are used in the retaining member according to the present invention possess a wide elastic range and a high elongation at break also after vulcanization of the tyre has occured.

Preferably, the bead core of the tyre of the present invention is obtained by spirally winding a plurality of rubberized wires (or cords), each individual wire (or cord) being radially coiled onto itself so as to form a column of radially superimposed wound coils.

Alternatively, said wires, which are radially coiled to form a plurality of axially adjacent columns of radially superimposed wound coils, are substantially free of a rubber coating (i.e. non-rubberized wires are used).

Preferably, said non-rubberized wires have a substantially rectangular cross section comprising two axially extending rectilinear and parallel opposite sides and two radially extending non-rectilinear lateral sides. Preferably, said non-rectilinear lateral sides are shaped so that, when two wires are radially stacked, their lateral sides form a profile that is complementary to the profile of an axially adjacent wire that can interfit therewith. In such a way, the obtained assembly is such that only a portion of the lateral side of one wire contacts only a portion of the lateral side of the axially adjacent wire. Preferably, the wires have a substantially hexagonal cross section. Such technical solutions are disclosed, for instance, in document US-5,007,471 in the name of the same Applicant.

Preferably, the bead core of the tyre of the present invention has a cross section of a polygonal shape, as described, for instance in documents US-4,192,368 and US-4,180,116 in the name of the same Applicant.

Alternatively, the bead core of the tyre of the present invention is a single wire bead core.

Alternatively, the bead core of the tyre of the present invention is of the Alderfer structure.

Preferably, the bead core of the tyre of the present invention further comprises a plurality of check elements, for instance in the form of metallic clips or strips, which are periodically applied along the bead core circumference so as to maintain the compactness of the convolutions of the metallic wires forming the bead core.

In the case the bead core of the tyre of the present invention is formed of non-rubberized wires, the bead core further comprises an elastomeric layer which is interposed between the plurality of coils forming the bead core and the retaining member. The presence of said elastomeric layer contributes in increasing the adhesiveness of said retaining member to said plurality of coils of non-rubberized metallic wires.

Preferably, the wheel rim on which the tyre of the present invention is mounted is provided with bead seats that are inclined at an angle of about 15° with respect to the tyre rotation axis.

Furthermore, it can be noted that, in case the bead core is formed of a plurality of coils of rubberized metallic wires, the geometrical stability of the tyre of the present invention is advantageously increased so that partial curing of the bead core is no more necessary. This inevitably results in a simplification of the tyre manufacturing process and thus in relevant time and costs savings.

Further features and advantages will appear more clearly with reference to the detailed description of some examples of a tyre according to the present invention. Said description, given hereinbelow, refers to the accompanying drawings which are provided solely by way of a non-limiting example and in which:
- Figure 1 shows a partial cross-sectional view of a truck tyre according to an embodiment of the present invention;
- Figure 2 shows a partial cross-sectional view of a truck tyre according to a further embodiment of the present invention;
- Figure 3 shows a partial perspective view of the bead core of the tyre of Figure 1;
- Figure 4 shows a partial perspective view of the bead core of the tyre of Figure 2, and
- Figure 5 shows a preformed threadlike element which can be used in a retaining member of a tyre according to the present invention.

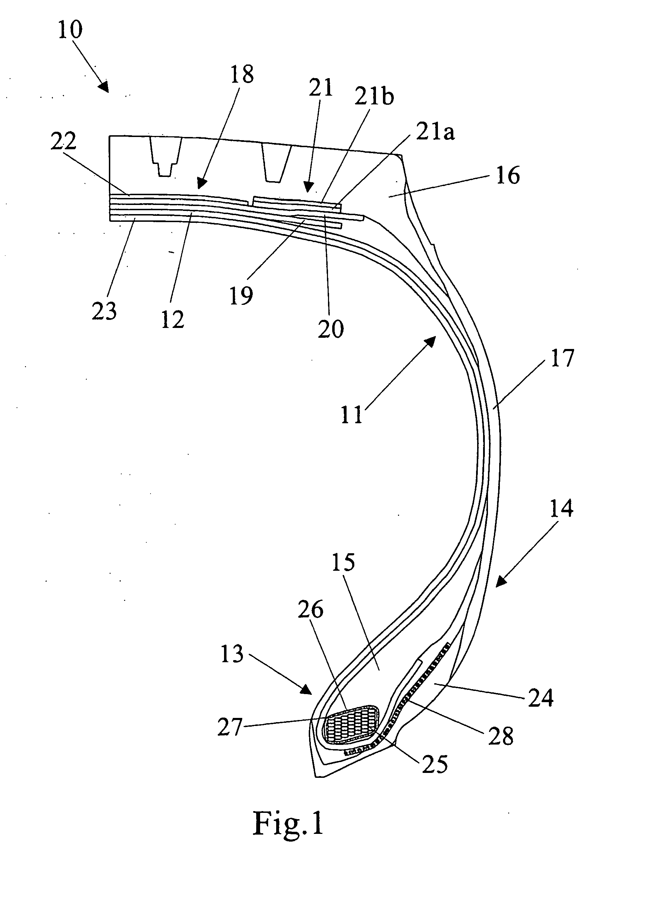

Fig. 1 shows a partial cross-sectional view of a truck tyre 10 according to the present invention and suitable for being mounted on a wheel rim (not shown). For simplicity, Figure 1 shows only a portion of the tyre, the remaining portion not represented being identical and simmetrically arranged with respect to the equatorial plane of the tyre.

The tyre 10 includes a carcass structure 11 comprising a carcass ply 12, the ends of which are associated with a pair of bead cores 13 (only one being shown in Figure 1).

In accordance with the embodiment shown in Figure 1, the carcass ply 12 is folded back to the respective bead cores 13 by turning up the carcass ply ends around said bead cores.

The bead cores 13 are axially spaced from each other and are incorporated in respective beads 14, in a position radially internal to the tyre.

In addition to the bead core 13, the bead 14 further comprises a bead filler 15, in a position radially external to the bead core.

The carcass ply 12 generally consists of a plurality of reinforcing elements arranged parallel to each other and at least partially coated with a layer of a crosslinked elastomeric material. These reinforcing elements are usually made of steel wires stranded together, coated with a metal alloy (for example copper/zinc, zinc/manganese, zinc/molybdenum/cobalt alloys and the like), or of textile fibres, for example rayon, nylon or polyethylene terephthalate.

Preferably, the carcass is of the radial type and namely incorporates reinforcing cords arranged in a direction substantially perpendicular to the equatorial plane of the tyre.

The tyre 10 comprises, moreover, a tread band 16, located on the crown of said carcass 11, and a pair of axially opposite sidewalls 17, each arranged between the respective bead 14 and the tread band 16.

Between the carcass ply 11 and the tread band 16, the tyre 10 comprises, moreover, a belt structure 18 which, in the example shown in Figure 1, envisages two radially superimposed belt plies 19, 20, two lateral reinforcing strips 21 (only one strip being shown in Figure 1) and a breaker layer 22.

In detail, the belt plies 19, 2, which are radially superimposed on each other, incorporate a plurality of reinforcing cords, which are typically metallic and obliquely oriented with respect to the equatorial plane of the tyre, parallel with each other in each ply and intersecting with those of the adjacent ply so as to form a predetermined angle with respect to a circumferential direction. Generally, said angle is comprised from about 10° to about 40°; preferably, said angle is comprised from about 12° to about 30°.

As mentioned above, the belt structure 18 further comprises two lateral reinforcing strips 21, commonly known as "zero-degree reinforcing strips", radially superimposed on the axially outer edges of the radially external belt layer 20. Said reinforcing strips 21 generally incorporate a plurality of reinforcing elements, typically metal cords with a breakage elongation value of from 3% to 10%, preferably of from 3.5% to 7%. Said reinforcing elements are coated by means of a crosslinked elastomeric material and oriented in a substantially circumferential direction, thus forming an angle of very few degrees (i.e. 0°) with respect to the equatorial plane of the tire. According to the embodiment shown in Figure 1 each lateral reinforcing strip 21 is formed of two radially superimposed layers 21a, 21b. Alternatively, instead of two lateral reinforcing strips 21, a continuous reinforcing layer, generally incorporating a plurality of reinforcing elements of the same kind disclosed above, which extends along the whole axial development of said belt structure may be present (not shown in Figure 1).

As mentioned above, the belt structure 18 further comprises a breaker layer 22 which is radially superimposed on the radially external belt layer 20 and interposed between the lateral reinforcing strips 21. Alternatively, the breaker layer extends over the reinforcing strips 21 (said embodiment being not shown in the figures). The breaker layer 22 is provided with reinforcing elements, typically metal cords, that are coated by means of a crosslinked elastomeric material and arranged parallel to one another and inclined with respect to the equatorial plane of the tire by an angle of from 10° to 70°, preferably of from 12° to 40°. The breaker layer 22 acts as a protection layer from stones or gravel possibly entrapped into the tread grooves and which may cause damages to the belt layers 19, 20 and even to the carcass ply 12.

Alternatively (said embodiment being not shown), the belt structure envisages three radially superimposed belt plies and a breaker layer in a position radially external to said superimposed belt plies.

Alternatively (said embodiment being not shown), the belt structure envisages two radially superimposed belt plies, one zero-degree lateral reinforcing strip that is radially superimposed on the axially outer edge of the radially external belt ply and a breaker layer in a position radially external to said reinforcing strip and the radially external belt ply (the breaker layer can only partially overlap the lateral reinforcing strip).

In the case of tubeless tyres, in a position radially internal to said carcass ply 12, a rubberized layer 23, the so-called "liner", is also envisaged, said layer being able to provide the tyre 10, during use, with the necessary impermeability to air.

Moreover, an antiabrasive strip 24 is usually placed in an axially external position relative to the carcass back-fold.

According to the embodiment shown in Figure 1, the bead core 13 is obtained by winding a plurality of non-rubberized wires 25, each wire being radially wound to form a column of radially superimposed coils. In Figure 1, seven wires 25 are used (so that seven axially adjacent columns are formed), each wire being spirally wound to form six radially superimposed coils.

According to the present invention, the bead core 13 comprises a retaining member 26 which envelopes the plurality of coils of metallic wires forming the bead core. The retaining member comprises a plurality of mutually substantially parallel elongated reinforcing elements 27 which comprise at least one preformed threadlike metallic element.

Preferably, the bead core 13 further comprises an elastomeric layer (not shown in the figures) which is interposed between the plurality of coils forming the bead core and the retaining member 26.

Alternatively, said elastomeric layer is not present. In this case, the elastomeric material - into which the elongated reinforcing elements 27 are embedded to form the retaining member 26 - preferably comprises an adhesion promoting additive so that the retaining member suitably envelopes and adheres to the metallic wires (which are preferably zinc plated) the coils of which form the bead core 13. Preferably, said adhesion promoting additive is selected from:
- salts of bivalent cobalt which may be selected from carboxylate compounds of formula (R-CO-O)₂Co wherein R is a C₆-C₂₄ aliphatic or aromatic group such as, for example, cobalt neodecanoate;
- organometallic complex based on boron and cobalt, the latter being linked together through oxygen (for example, the complex known under the tradename of Manobond^{®} 680C from OMG group);
- resorcinol/hexamethoxymethylenemelamine (HMMM) system or resorcinol/hexamethylenetetramine (HMT) system; or mixtures thereof. Preferably, a mixture of an organometallic complex based on boron and cobalt with a resorcinol/hexamethoxymethylenemelamine (HMMM) system is used.

Preferably, said adhesion promoting additive is present in the elastomeric composition in an amount of from 0.2 phr to 3 phr, preferably of from 0.5 phr to 2.5 phr.

According to the embodiment of Figure 1, the tyre of the present invention further comprises a reinforcing layer 28 which is generally known with the term of "chafer" and which has the function of increasing the bead stiffness.

The chafer 28 comprises a plurality of elongated reinforcing elements which are embedded in an elastomeric matrix and which are generally made of textile materials (e.g. aramide or ryon) or metallic materials (e.g. steel cord).

According to the present invention, preferably the chafer is provided with metallic elongated reinforcing elements which comprise preformed threadlike elements of small diameter, as described above with reference to the retaining member 26.

The chafer can be located in a plurality of positions inside of the tyre bead and/or sidewall. According to the embodiment shown in Figure 1, the chafer 28 is located in a position axially external with respect to the carcass ply 12. In case the tyre is provided with two carcass plies, the chafer can be positioned between said carcass plies. Preferably, the chafer starts in correspondence of the radially external portion of the bead core, it follows the perimetral profile of the bead filler and ends in correspondence of the tyre sidewall. Alternatively, the chafer can extend along the tyre sidewall, up to the ends of the tyre belt structure.

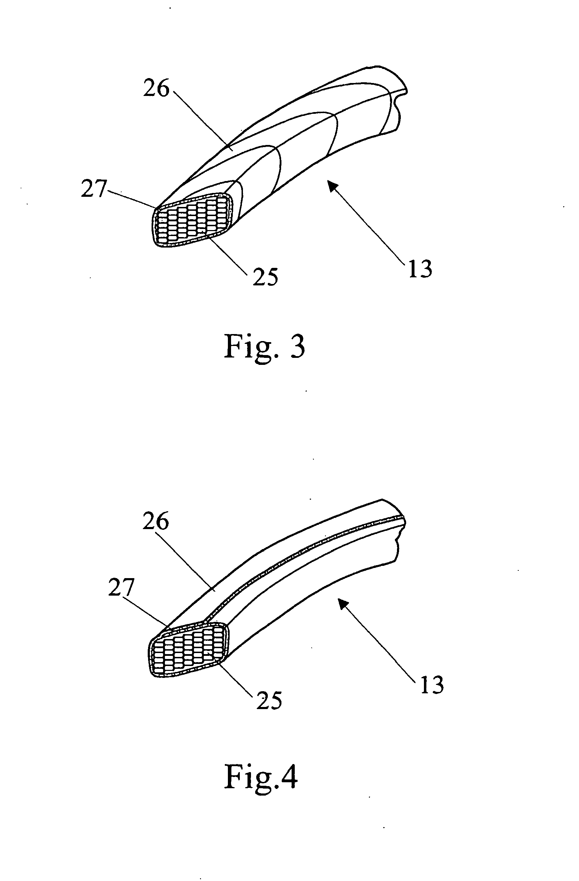

According to the embodiment shown in Figure 1, the retaining member 26 is in the form of a continuous strip consisting of an elastomeric material into which the elongated reinforcing elements are embedded, said strip being spirally wound around the plurality of coils of metallic wires that form the bead core so as to completely envelope said coils along the circumferential outer profile thereof. Preferably, said winding is carried out in such a way that a partial overlapping of axially adjacent coils is obtained, as shown in Figure 3.

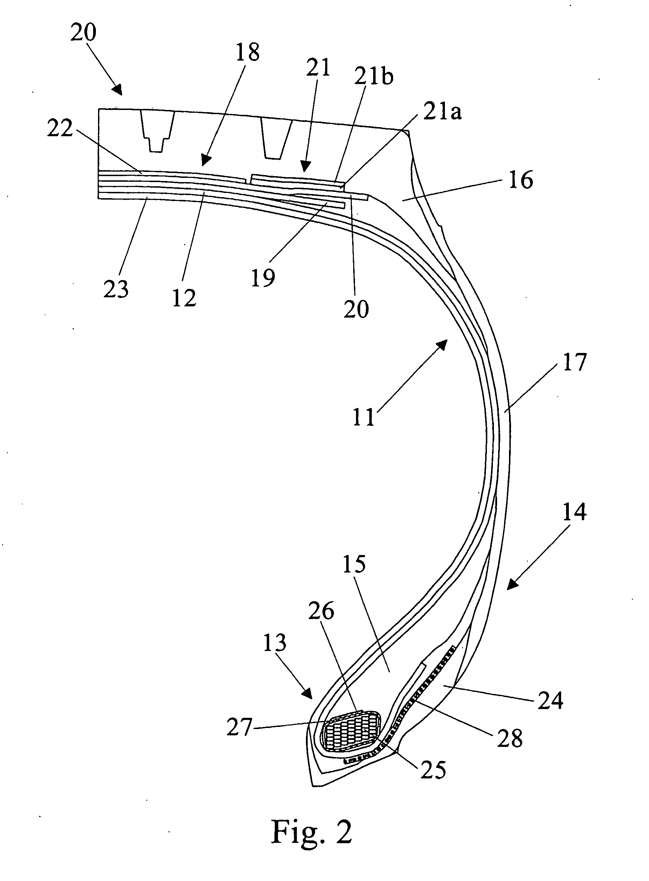

Figure 2 shows a partial cross-sectional view of a truck tyre 20 similar to that of Figure 1. Therefore, for simplicity of description, the components of Figure 2 which are similar or identical with respect to those of Figure 1 will be addressed to in the description with the same reference signs. The only difference of tyre 20 shown in Figure 2 with respect to tyre 10 shown in Figure 1 consists in that the retaining member 26 is applied in the form of a sheet (said sheet consisting of an elastomeric material into which the elongated reinforcing elements are embedded), said sheet being folded about the circumferential outer profile of the plurality of coils of metallic wires forming the bead core. Preferably, the step of folding is carried out so that a partial overlapping of the lateral edges of the sheet is obtained, as shown in Figure 4. According to a further embodiment (not shown), said sheet is folded at least twice about the circumferential outer profile of the plurality of coils of metallic wires forming the bead core.

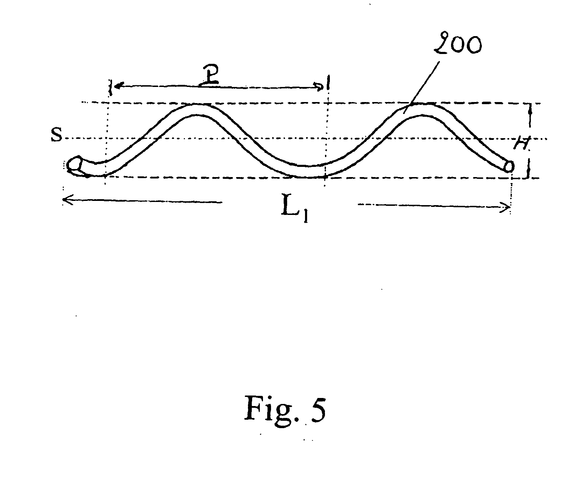

Figure 5 shows a threadlike element 200 which is sinusoidally preformed in accordance with the present invention.

As mentioned above, said deformations, generally in the form of periodic deviations from a straight line, may be obtained in any known form. Preferably, said deformations are of the coplanar type. Even more preferably, said deformations consist of substantially sinusoidal undulations (such as those illustrated in Fig. 5) having a wavelength (or pitch) P and a wave amplitude H.

For the purposes of the present invention, "wavelength P" is to be understood as the length of the minimum section which is repeated periodically, and "wave amplitude H" is to be understood as meaning twice the amplitude of maximum transverse deviation (assumed to be equal in both directions) of the threadlike element from the centre axis S (see Figure 5).

As mentioned above, preferably, the wavelength (or pitch) P is between 2.5 mm and 30 mm, more preferably between 5 mm and 25 mm.

Preferably, the wave amplitude H is between 0.12 mm and 1 mm, more preferably between 0.14 mm and 0.60 mm.

Generally, the preformed threadlike elements according to the present invention have a diameter D of between 0.05 mm and 0.25 mm, preferably between 0.08 mm and 0.20 mm. Particularly preferred is a diameter of 0.12 mm.

As mentioned above, the threadlike elements are metallic.

Preferably, the threadlike elements are made of steel. In the case where the diameter of the threadlike element is between 0.4 mm and 0.1 mm, the breaking strength of a standard NT (normal tensile) steel ranges between about 2,600 N/mm² (or 2,600 MPa - MegaPascal) and about 3,200 N/mm², the breaking strength of a HT (High Tensile) steel ranges between about 3,000 N/mm² and about 3,600 N/mm², the breaking strength of a SHT (Super High Tensile) steel ranges between about 3,300 N/mm² and about 3,900 N/mm², the breaking strength of a UHT (Ultra High Tensile) steel ranges between about 3,600 N/mm² and about 4,200 N/mm². Said breaking strength values depend in particular on the quantity of carbon contained in the steel.

Generally, said threadlike elements are provided with a brass coating (Cu of between 60% and 75% by weight, Zn of between 40% and 25% by weight), having a thickness of between 0.10 µm and 0.50 µm. Said coating ensures better adhesion of the threadlike element to the rubberizing compound and provides for protection against corrosion of the metal, both during production of the tyre and during use thereof. Should it be necessary to ensure a greater degree of protection against corrosion, said threadlike elements may be advantageously provided with an anti-corrosive coating other than brass, able to ensure a greater corrosion resistance, such as, for example, a coating based on zinc, zinc/manganese (ZnMn) alloys, zinc/cobalt (ZnCo) alloys or zinc/cobalt/manganese (ZnCoMn) alloys.

Preferably the retaining member according to the present invention is obtained by using cords having a structure of the type n x D, where n is the number of threadlike elements forming the cord and D is the diameter of each threadlike element. Preferably n ranges between 2 and 5. Particularly preferred is n equal to three.

Preferably, the stranding pitch of said cord ranges between 2.5 mm and 25 mm, more preferably between 6 mm and 18 mm. Particularly preferred is a stranding pitch of 12.5 mm.

Preferred cord constructions are, for example: 2x (i.e. two threadlike elements twisted together), 3x, 4x, 5x, 2+1 (i.e. one strand of two threadlike elements and one strand of one threadlike element, said two strands being twisted together), 2+2, 3+2, 1+4.

Preferably, the density of the elongated reinforcing elements in the retaining member according to the present invention is comprised between 40 cords/dm and 160 cords/dm, more preferably is comprised between 80 cords/dm and 120 cords/dm. Particularly preferred are densities of 85 cords/dm and 105 cords/dm.

Preferably, the elongated reinforcing elements of the retaining member according to the present invention are obliquely oriented with respect to a radial plane of the tyre.

In the case the retaining member is applied in the form of a sheet that is folded about the circumferential outer profile of the coils of the bead core, preferably said elongated reinforcing elements are disposed at an angle relative to a radial plane of the tyre in the range of 15° to 60°, more preferably 30° to 45°.

Alternatively, in the case the retaining member is applied in the form of a continuous strip that is spirally wound about the circumferential outer profile of the bead core, said elongated reinforcing elements are parallely disposed with respect to the longitudinal development of the strip. Preferably, said strip is spirally wound around the coils of the bead core at a twisting angle that is comprised in the range of 50° to 70°.

Preferably, the thickness of the retaining element - i.e. the total thickness including the diameter of the cord and the rubber compound into which the cord is embedded - is comprised between 0.5 (± 0.1) mm and 1.7 (± 0.1) mm, more preferably between 0.8 (± 0.1) mm and 1.1 (± 0.1) mm.

Preferably, the truck tyre of the present invention has a H/C ratio, i.e. the ratio of the height of the right cross-section to the maximum width of the section, lower than 1. Preferably, the H/C ratio is lower than 0.9.

The present invention relates to a pneumatic tyre suitable for being used in trucks or lorries, especially for medium/heavy transport. The present invention is also suitable for light truck vehicles.

For further description of the invention, an illustrative example is given below.

### EXAMPLE 1

Two typologies of tyres (tyre A and tyre B), having size 315/80 R22.5, were manufactured.

Tyres A and B had identical structural elements, i.e. identical carcass (one carcass ply), two crossed belt plies, two lateral reinforcing strips (zero-degree reinforcing strips, positioned radially external to the crossed belt plies and formed of two radially superimposed layers, as shown in Figures 1 and 2), a breaker layer (which is radially superimposed on the radially external belt layer and interposed between the lateral reinforcing strips), identical tread band.

Tyre A (tyre according to the present invention) further comprised a bead core as that shown in Figure 2, i.e. a bead core which was obtained by spirally winding seven non-rubberized wires (each wire having a substantially hexagonal cross section and being made of zinc plated HT steel material) to form seven axially adjacent columns, each column being formed of six radially superimposed coils. According to the present invention, the bead core further comprised a retaining member which was applied in the form of a sheet by folding the latter about the circumferential outer profile of the plurality of coils of metallic wires forming the bead core. The folding step was carried out in such a way that a partial overlapping of the lateral edges of the sheet was obtained, as shown in Figure 4. The retaining member consisted of an elastomeric material into which the elongated reinforcing elements were embedded, each elongated reinforcing element consisting of a 3x0.12 HT steel cord (i.e. a cord formed of three HT steel wires having a diameter of 0.12 mm). Each wire of the cord was preformed according to a substantially sinusoidal undulation (as shown in Figure 5) having a wavelength (pitch) of 2.200 mm and a wave amplitude of 0.345 mm. The elongated reinforcing elements in the retaining member were disposed at an angle, relative to a radial plane of the tyre, of about 45°. The density of the elongated reinforcing elements in the retaining member was of 105 cords/dm and the thickness of said member - i.e. the total thickness including the diameter of the cord and the rubber compound into which the cord was embedded - was of about 0.95 mm.

Tyre B (comparative) further comprised a bead core similar to the bead core of tyre A, the only difference being that the retaining member consisted of an elastomeric material into which textile elongated reinforcing elements were embedded. In detail, the elongated reinforcing elements consisted of Nylon 940x2, i.e. a cord formed of two filaments, each filament having a count of 940 dTex (dTex is the weight in grams corresponding to 10,000 m of fiber) and a twist of 48 tpm (turn per meter). The cord twist was of 48 tpm. The elongated reinforcing elements in the retaining member were disposed at an angle, relative to a radial plane of the tyre, of about 45°. The density of the elongated reinforcing elements in the retaining member was of 68 cords/dm and the thickness of said member - i.e. the total thickness including the diameter of the cord and the rubber compound into which the cord was embedded - was of about 0.88 mm.

Indoor testings were carried out on three tyres A and three tyres B so that an average value of the tests results could be calculated.
a) Truck tyre bead fatigue stress test The tyres were mounted on a 9.00" wheel rim and inflated at a pressure of 135 psi (9.5 bar). The tyres were subjected to a load of 9,220 kgf, i.e. to an overload of 240% with respect to the tyre load capacity. Successively the tyres were rotated on a road wheel at a fixed and controlled speed of 20 km/h. The test was stopped when the tyres came to a failure and the time, at which the tyre failure occurred, was detected.
The results are summarized in Table 1 from which it can be pointed out that the fatigue stress is incremented of more than 19% for the tyre A of the present invention with respect to the comparative tyre B. Such a result shows that the tyre of the present invention provides a better geometrical stability and an increased bead integrity during use in comparison with conventional tyres.

**Table 1**

| | | | | |
|---|---|---|---|---|
| | sample 1 (h) | sample 2 (h) | sample 3 (h) | Average value (h) |
| TYRE A (invention) | 312 | 341 | 354 | 336 |
| TYRE B (comparative) | 273 | 293 | 281 | 282 |

b) Tyre burst test
The tyres, loaded with the nominal operating load and mounted on the respective wheel rim, were progressively inflated with water. The test was stopped when the tyre burst or when the tyre bead slipped off the rim and the time, at which said phenomena occurred, was detected.
The results are summarized in Table 2 from which it can be pointed out that tyre burst is incremented of more than 7% for the tyre A of the present invention with respect to the comparative tyre B. Such a result shows that the compactness as well as the resistance to local deformations of the bead core of the tyre of the present invention is increased with respect to those of conventional tyres.

**Table 2**

| | sample 1 (bar) | sample 2 (bar) | sample 3 (bar) | Average value (bar) |
|---|---|---|---|---|
| TYRE A (invention) | 30 | 29 | 30 | 29.7 |
| TYRE B (comparative) | 27 | 27 | 29 | 27.7 |

## Claims

1. A truck pneumatic tyre (10; 20) comprising:
- a bead structure (14) comprising a pair of axially spaced apart bead cores (13);
- a carcass structure (11) comprising at least one carcass ply (12) extending between said bead cores and secured at axially opposite end portions to a respective one of said bead cores, each axial end portion being turned up around said bead cores;
- a tread band (16) extending circumferentially around said carcass structure;
- a belt structure (18) circumferentially located between said carcass structure and said tread band; and
- at least one pair of sidewalls (17) applied to said carcass structure in axially opposite positions,
wherein each bead core comprises:
• a plurality of coils of at least one metallic wire (25), said coils being radially superimposed and axially arranged side-by-side with respect to one another, and
• a retaining member (26) enveloping said plurality of coils, said retaining member comprising a plurality of mutually substantially parallel elongated reinforcing elements (27), said elongated reinforcing elements comprising at least one preformed threadlike metallic element (200), said at least one preformed threadlike metallic element having a diameter in the range of from 0.05 mm to 0.25 mm.

2. Tyre (10; 20) according to Claim 1, in which each elongated reinforcing element (27) is a metallic cord comprising a plurality of threadlike elements, at least one (200) of said threadlike elements being preformed.

3. Tyre (10; 20) according to Claim 2, in which the threadlike elements (200) of said elongated reinforcing elements (27) are all preformed.

4. Tyre (10; 20) according to Claim 1, in which said at least one threadlike element (200) is preformed with a deformation of the coplanar type.

5. Tyre (10; 20) according to Claim 4, in which said at least one threadlike element (200) is preformed so as to have a form of the undulating type.

6. Tyre (10; 20) according to Claim 5, in which said undulating form is of a substantially sinusoidal type.

7. Tyre (10; 20) according to Claim 6, in which said substantially sinusoidal form has a wavelength (P) of between 2.5 mm and 30 mm.

8. Tyre (10; 20) according to Claim 6, in which said substantially sinusoidal form has a wave amplitude (H) of between 0.12 mm and 1 mm.

9. Tyre (10; 20) according to Claim 5, in which said undulating form is of the helical type.

10. Tyre (10; 20) according to Claim 1, in which said at least one metallic threadlike element consists of steel.

11. Tyre (10; 20) according to Claim 1, in which said at least one metallic threadlike element has a coating chosen from the group comprising: brass, zinc, zinc/manganese alloys, zinc/cobalt alloys, zinc/cobalt/manganese alloys.

12. Tyre (10; 20) according to Claim 2, in which the number of the metallic threadlike elements is between 2 and 5.

13. Tyre (10; 20) according to Claim 2, in which the stranding pitch of the metallic threadlike elements is between 2.5 mm and 25 mm.

14. Tyre (10; 20) according to Claim 1, in which the density of the elongated reinforcing elements (27) is comprised between 40 cords/dm and 160 cords/dm.

15. Tyre (10; 20) according to Claim 1, in which the bead core (13) is obtained by spirally winding a plurality of rubberized wires, each wire being radially coiled onto itself so as to form a column of radially superimposed wound coils.

16. Tyre (10; 20) according to Claim 1, in which the bead core (13) is obtained by spirally winding a plurality of non-rubberized wires, each wire being radially coiled onto itself so as to form a column of radially superimposed wound coils.

17. Tyre (10; 20) according to Claim 16, in which said non-rubberized wires have a substantially rectangular cross section.

18. Tyre (10; 20) according to Claim 16, in which said non-rubberized wires have a substantially hexagonal cross section.

19. Tyre (10; 20) according to Claim 1, in which the bead core (13) has a cross section of a polygonal shape.

20. Tyre (10; 20) according to Claim 1, in which the bead core (13) is a single wire bead core.

21. Tyre (10; 20) according to Claim 1, in which the bead core (13) is of the Alderfer structure.

22. Tyre (10; 20) according to Claim 1, in which the bead core (13) further comprises a plurality of check elements periodically applied along the bead core circumference.

23. Tyre (10; 20) according to Claim 16, in which the bead core (13) further comprises an elastomeric layer interposed between said plurality of coils and the retaining member (26).

24. Tyre (10; 20) according to Claim 1, in which the elongated reinforcing elements (27) are embedded in an elastomeric material.

25. Tyre (10; 20) according to Claim 24, in which said elastomeric material comprises an adhesion promoting additive.

26. Tyre (10; 20) according to Claim 1, further comprising a chafer (28) which comprises a plurality of substantially parallel metallic elongated reinforcing elements.

27. Tyre (10; 20) according to Claim 26, in which the elongated reinforcing elements of said chafer (28) comprise at least one preformed threadlike element.

28. Tyre (10; 20) according to Claim 26, in which the chafer (28) is located in a position axially external with respect to the at least one carcass ply (12).

29. Tyre (10; 20) according to Claim 1, in which the retaining member (26) is in the form of a continuous strip that is spirally wound around the plurality of coils of the bead core (13).

30. Tyre (10; 20) according to Claim 29, in which the strip is spirally wound at a twisting angle comprised in the range of 50° to 70°.

31. Tyre (10; 20) according to Claim 1, in which the retaining member (26) is applied in the form of a sheet that is folded about the circumferential outer profile of the plurality of coils of the bead core (13).

32. Tyre (10; 20) according to Claim 31, in which the elongated reinforcing elements (27) are disposed at an angle relative to a radial plane of the tyre in the range of 15° to 60°.

33. Tyre (10; 20) according to Claim 1, in which the H/C ratio is lower than 1.

34. Tyre (10; 20) according to Claim 33, in which the H/C ratio is lower than 0.9.

## Patentansprüche

1. Lastwagenluftreifen (10; 20)
- mit einem Wulstaufbau (14), der ein Paar von axial beabstandeten Wulstkernen (13) aufweist,
- mit einem Karkassenaufbau (11), der wenigstens eine Karkassenlage (12) hat, die sich zwischen den Wulstkernen erstreckt und auf axial gegenüberliegenden Endabschnitten an einem entsprechenden Wulstkern befestigt ist, wobei jeder axiale Endabschnitt um die Wulstkerne herum nach oben umgeschlagen ist,
- mit einem Laufflächenband (16), das sich am Umfang um den Karkassenaufbau herum erstreckt,
- mit einem Gurtaufbau (18), der am Umfang zwischen dem Karkassenaufbau und dem Laufflächenband angeordnet ist, und
- mit wenigstens einem Paar von Seitenwänden (17), die auf dem Karkassenaufbau in axial gegenüberliegenden Positionen angebracht sind
wobei jeder wulstkern
• eine Vielzahl von Windungen aus wenigstens einem Metalldraht (25), die radial aufeinander und axial Seite an Seite bezüglich einander angeordnet sind, und
• ein Halteelement (26) aufweist, das die Vielzahl von Windungen umhüllt und eine Vielzahl von zueinander im Wesentlichen parallelen langgestreckten Verstärkungselementen (27) aufweist, die wenigstens ein vorgeformtes fadenförmiges metallisches Element (200) aufweisen, das einen Durchmesser im Bereich von 0,05 mm bis 0,25 mm hat.

2. Reifen (10; 20) nach Anspruch 1, bei welchem jedes langgestreckte Verstärkungselement (27) ein metallischer Cord ist, der eine Vielzahl von fadenförmigen Elementen aufweist, von denen wenigstens eines (200) vorgeformt ist.

3. Reifen (10; 20) nach Anspruch 2, bei welchem die fadenförmigen Elemente (200) der langgestreckten Verstärkungselemente (27) alle vorgeformt sind.

4. Reifen (10; 20) nach Anspruch 1, bei welchem das wenigstens eine fadenförmige Element (200) mit einer Verformung der koplanaren Art vorgeformt ist.

5. Reifen (10; 20) nach Anspruch 4, bei welchem das wenigstens eine fadenförmige Element (200) so vorgeformt ist, dass es eine Form der wellenförmigen Art hat.

6. Reifen (10; 20) nach Anspruch 5, bei welchem die wellenartige Form eine im Wesentlichen sinusartige Form ist.

7. Reifen (10; 20) nach Anspruch 6, bei welchem die im Wesentlichen sinusartige Form eine Wellenlänge (P) zwischen 2,5 mm und 30 mm hat.

8. Reifen (10; 20) nach Anspruch 6, bei welchem die im Wesentlichen sinusartige Form eine Wellenamplitude (H) zwischen 0,12 mm und 1 mm hat.

9. Reifen (10; 20) nach Anspruch 5, bei welchem die wellenartige Form eine wendelartige Form ist.

10. Reifen (10; 20) nach Anspruch 1, bei welchem das wenigstens eine metallische fadenförmige Element aus Stahl besteht.

11. Reifen (10; 20) nach Anspruch 1, bei welchem das wenigstens eine metallische fadenförmige Element eine Beschichtung hat, die aus der Gruppe ausgewählt ist, die Messing, Zink, Zink-Mangan-Legierungen, Zink-Kobalt-Legierungen und Zink-Kobalt-Mangan-Legierungen aufweist.

12. Reifen (10; 20) nach Anspruch 2, bei welchem die Anzahl der metallischen fadenförmigen Elemente zwischen 2 und 5 liegt.

13. Reifen (10; 20) nach Anspruch 2, bei welchem die Schlaglänge der metallischen fadenförmigen Elemente zwischen 2,5 mm und 25 mm liegt.

14. Reifen (10; 20) nach Anspruch 1, bei welchem die Dichte der langgestreckten Verstärkungselemente (27) zwischen 40 Corden/dm und 160 Corden/dm liegt.

15. Reifen (10; 20) nach Anspruch 1, bei welchem der Wulstkern (13) dadurch erhalten wird, dass eine Vielzahl von gummierten Drähten in Wendeln gelegt wird, wobei jeder Draht radial auf sich selbst so gewickelt wird, dass er eine Säule von radial aufeinander gelegten Wickelwindungen bildet.

16. Reifen (10; 20) nach Anspruch 1, bei welchem der Wulstkern (13) dadurch erhalten wird, dass eine Vielzahl von nicht gummierten Drähten in Wendeln gelegt wird, wobei jeder Draht radial auf sich selbst so gewickelt wird, dass er eine Säule von radial aufeinander gelegten Wickel Windungen bildet.

17. Reifen (10; 20) nach Anspruch 16, bei welchem die nicht gummierten Drähte einen im Wesentlichen rechteckigen Querschnitt haben.

18. Reifen (10; 20) nach Anspruch 16, bei welchem die nicht gummierten Drähte einen im Wesentlichen sechseckigen Querschnitt haben.

19. Reifen (10; 20) nach Anspruch 1, bei welchem der Wulstkern (13) einen Querschnitt mit einer polygonalen Form hat.

20. Reifen (10; 20) nach Anspruch 1, bei welchem der Wulstkern (13) ein Einzeldrahtwulstkern ist.

21. Reifen (10; 20) nach Anspruch 1, bei welchem der Wulstkern (13) einen AlderferAufbau hat.

22. Reifen (10; 20) nach Anspruch 1, bei welchem der Wulstkern (13) weiterhin eine Vielzahl von Prüfelementen aufweist, die periodisch längs des Wulstkernumfangs aufgebracht sind.

23. Reifen (10; 20) nach Anspruch 16, bei welchem der Wulstkern (13) weiterhin eine elastomere Schicht aufweist, die zwischen der Vielzahl von Windungen und dem Halteelement (26) angeordnet ist.

24. Reifen (10; 20) nach Anspruch 1, bei welchem die langgestreckten Verstärkungselemente (27) in ein elastomeres Material eingebettet sind.

25. Reifen (10; 20) nach Anspruch 24, bei welchem das elastomere Material einen die Haftung begünstigenden Zusatzstoff aufweist.

26. Reifen (10; 20) nach Anspruch 1, welcher weiterhin ein Wulstband (28) aufweist, das eine Vielzahl von im Wesentlichen parallelen metallischen langgestreckten Verstärkungselementen hat.

27. Reifen (10; 20) nach Anspruch 26, bei welchem die langgestreckten Verstärkungselemente des Wulstbandes (28) wenigstens ein vorgeformtes fadenförmiges Element aufweisen.

28. Reifen (10; 20) nach Anspruch 26, bei welchem das Wulstband (28) in einer bezüglich der wenigstens einen Karkassenlage (12) axial äußeren Position angeordnet ist.

29. Reifen (10; 20) nach Anspruch 1, bei welchem das Halteelement (26) die Form eines fortlaufenden Bandes hat, das wendelförmig um die Vielzahl von Windungen des Wulstkerns (13) gewickelt ist.

30. Reifen (10; 20) nach Anspruch 29, bei welchem das Band wendelförmig mit einem Verdrehungswinkel im Bereich von 50° bis 70° gewickelt ist.

31. Reifen (10; 20) nach Anspruch 1, bei welchem das Halteelement (26) in Form einer Bahn aufgebracht ist, die um das Umfangsaußenprofil der Vielzahl von Windungen des Wulstkern (13) gefaltet ist.

32. Reifen (10; 20) nach Anspruch 31, bei welchem die langgestreckten Verstärkungselemente (27) bezogen auf eine Radialebene des Reifens in einem Winkel im Bereich von 15° bis 60° angeordnet sind.

33. Reifen (10; 20) nach Anspruch 1, bei welchem das Verhältnis von H/C kleiner als 1 ist.

34. Reifen (10; 20) nach Anspruch 33, bei welchem das Verhältnis von H/C kleiner als 0,9 ist.

## Revendications

1. Pneu de camion (10 ; 20) comprenant :
- une structure de talon (14) comprenant une paire de tringles axialement espacées (13) ;
- une structure de carcasse (11) comprenant au moins une nappe de carcasse (12) s'étendant entre lesdites tringles et fixée en des parties d'extrémités axialement opposées à une tringle respective parmi lesdites tringles, chaque partie d'extrémité axiale étant tournée vers le haut autour desdites tringles ;
- une bande de roulement (16) s'étendant dans le sens de la circonférence autour de ladite structure de carcasse ;
- une structure de ceinture (18) positionnée circonférentiellement entre ladite structure de carcasse et ladite bande de roulement ; et
- au moins une paire de flancs (17) appliqués sur ladite structure de carcasse dans des positions axialement opposées,
dans lequel chaque tringle comprend :
• une pluralité de spires d'au moins un fil métallique (25), lesdites spires étant superposées radialement et disposées axialement côte à côte les unes par rapport aux autres, et
• un élément de retenue (26) enveloppant ladite pluralité de spires, ledit élément de retenue comprenant une pluralité d'éléments de renforcement allongés mutuellement sensiblement parallèles (27), lesdits éléments de renforcement allongés comprenant au moins un élément métallique en forme de fil préformé (200), ledit au moins un élément métallique en forme de fil préformé ayant un diamètre compris dans l'intervalle de 0,05 mm à 0,25 mm.

2. Pneu (10 ; 20) selon la revendication 1, dans lequel chaque élément de renforcement allongé (27) est un câble métallique comprenant une pluralité d'éléments en forme de fils, au moins l'un (200) desdits éléments en forme de fils étant préformé.

3. Pneu (10 ; 20) selon la revendication 2, dans lequel les éléments en forme de fils (200) desdits éléments de renforcement allongés (27) sont tous préformés.

4. Pneu (10 ; 20) selon la revendication 1, dans lequel ledit au moins un élément en forme de fil (200) est préformé avec une déformation de type coplanaire.

5. Pneu (10 ; 20) selon la revendication 4, dans lequel ledit au moins un élément en forme de fil (200) est préformé de manière à avoir une forme du type ondulé.

6. Pneu (10 ; 20) selon la revendication 5, dans lequel ladite forme ondulée est de type sensiblement sinusoïdal.

7. Pneu (10 ; 20) selon la revendication 6, dans lequel ladite forme sensiblement sinusoïdale a une longueur d'onde (P) comprise entre 2,5 mm et 30 mm.

8. Pneu (10 ; 20) selon la revendication 6, dans lequel ladite forme sensiblement sinusoïdale a une amplitude d'onde (H) comprise entre 0,12 mm et 1 mm.

9. Pneu (10 ; 20) selon la revendication 5, dans lequel ladite forme ondulée est de type hélicoïdal.

10. Pneu (10 ; 20) selon la revendication 1, dans lequel ledit au moins un élément en forme de fil métallique est en acier.

11. Pneu (10 ; 20) selon la revendication 1, dans lequel ledit au moins un élément en forme de fil métallique comporte un revêtement choisi dans le groupe comprenant : le laiton, le zinc, les alliages zinc-manganèse, les alliages zinc-cobalt, les alliages zinc-cobalt-manganèse.

12. Pneu (10 ; 20) selon la revendication 2, dans lequel le nombre d'éléments en forme de fil métallique est compris entre 2 et 5.

13. Pneu (10 ; 20) selon la revendication 2, dans lequel le pas de toronage des éléments en forme de fil métallique est compris entre 2,5 mm et 25 mm.

14. Pneu (10 ; 20) selon la revendication 1, dans lequel la densité des éléments de renforcement allongés (27) est comprise entre 40 câbles/dm et 160 câbles/dm.

15. Pneu (10 ; 20) selon la revendication 1, dans lequel la tringle (13) est obtenue en enroulant en spirale une pluralité de fils métalliques caoutchoutés, chaque fil étant enroulé radialement sur lui-même afin de former une colonne de spires superposées radialement.

16. Pneu (10 ; 20) selon la revendication 1, dans lequel la tringle (13) est obtenue en enroulant en spirale une pluralité de fils métalliques non caoutchoutés, chaque fil étant enroulé radialement sur lui-même afin de former une colonne de spires superposées radialement.

17. Pneu (10 ; 20) selon la revendication 16, dans lequel lesdits fils métalliques non caoutchoutés sont de section sensiblement rectangulaire.

18. Pneu (10 ; 20) selon la revendication 16, dans lequel lesdits fils métalliques non caoutchoutés sont de section sensiblement hexagonale.

19. Pneu (10 ; 20) selon la revendication 1, dans lequel la tringle (13) est de section polygonale.

20. Pneu (10 ; 20) selon la revendication 1, dans lequel la tringle (13) est une tringle à un seul fil métallique.

21. Pneu (10 ; 20) selon la revendication 1, dans lequel la tringle (13) présente une structure d'Alderfer.

22. Pneu (10 ; 20) selon la revendication 1, dans lequel la tringle (13) comprend en outre une pluralité d'éléments de contrôle appliqués périodiquement le long de la circonférence de la tringle.

23. Pneu (10 ; 20) selon la revendication 16, dans lequel la tringle (13) comprend en outre une couche en élastomère intercalée entre ladite pluralité de spires et l'élément de retenue (26).

24. Pneu (10 ; 20) selon la revendication 1, dans lequel les éléments de renforcement allongés (27) sont noyés dans un matériau élastomère.

25. Pneu (10 ; 20) selon la revendication 24, dans lequel ledit matériau élastomère comprend un additif favorisant l'adhérence.

26. Pneu (10 ; 20) selon la revendication 1, comprenant en outre une bandelette talon (28) qui comprend une pluralité d'éléments de renforcement métalliques allongés sensiblement parallèles.

27. Pneu (10 ; 20) selon la revendication 26, dans lequel les éléments de renforcement allongés de ladite bandelette talon (28) comprennent au moins un élément en forme de fil préformé.

28. Pneu (10 ; 20) selon la revendication 26, dans lequel la bandelette talon (28) est située en une position axialement externe par rapport à ladite au moins une nappe de carcasse (12).

29. Pneu (10 ; 20) selon la revendication 1, dans lequel l'élément de retenue (26) est sous la forme d'une bande continue qui est enroulée en spiralé autour de la pluralité de spires de la tringle (13).

30. Pneu (10 ; 20) selon la revendication 29, dans lequel la bande est enroulée en spirale avec un angle de torsion compris dans l'intervalle de 50° à 70°.

31. Pneu (10 ; 20) selon la revendication 1, dans lequel l'élément de retenue (26) est appliqué sous la forme d'une feuille qui est pliée autour du profil extérieur circonférentiel de la pluralité de spires de la tringle (13).

32. Pneu (10 ; 20) selon la revendication 31, dans lequel les éléments de renforcement allongés (27) sont disposés en formant un angle relativement à un plan radial du pneu dans l'intervalle de 15° à 60°.

33. Pneu (10 ; 20) selon la revendication 1, dans lequel le rapport H/C est inférieur à 1.

34. Pneu (10 ; 20) selon la revendication 33, dans lequel le rapport H/C est inférieur à 0,9.
